(19) Europäisches Patentamt

European Patent Office

Office européen des brevets

(11) **EP 1 406 432 A2**

(12) **EUROPEAN PATENT APPLICATION**

(43) Date of publication:
**07.04.2004 Bulletin 2004/15**

(51) Int Cl.⁷: **H04N 1/21**

(21) Application number: **03022107.1**

(22) Date of filing: **29.09.2003**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **30.09.2002 JP 2002287357**

(71) Applicant: **Fuji Photo Film Co., Ltd.
Kanagawa-ken (JP)**

(72) Inventor: **Iida, Takayuki, Fuji Photo Film Co., Ltd.
Ashigarakami-gun Kanagawa-ken (JP)**

(74) Representative: **Klunker . Schmitt-Nilson . Hirsch
Winzererstrasse 106
80797 München (DE)**

(54) **Recording media editing apparatus**

(57) Digital image data can be edited easily to reflect a preference or an intention of a user. Sizes of free spaces and used spaces of recording media of different types are read and displayed on a display device by using the same scale for the same sizes. By enabling the user to visually confirm the sizes in this manner, the digital image data sets can be edited.

FIG.1

## Description

BACKGROUND OF THE INVENTION

Field of the Invention

The present invention relates to an apparatus for editing image data obtained by digital cameras and stored in recording media of different types.

Description of the Related Art

Large-capacity recording media such as SmartMedia™ have been spreading in use for storing images obtained by digital still cameras (hereinafter referred to as digital cameras). However, a style of using such large-capacity recording media has not been established. Therefore, large-capacity recording media have not been used efficiently.

Unlike images recorded on a film, digital image data recorded in a recording medium do not enable a user to view images stored therein by looking at the recording medium. Therefore, if a user receives a recording medium, whether or not the recording medium has data to be printed cannot be confirmed by simply looking at the recording medium. Therefore, an apparatus has been proposed for easily and certainly carrying out reception processing regarding data to be printed (Japanese Unexamined Patent publication No. 11 (1999)-125867). In this apparatus, judgment is automatically made as to whether or not digital image data recorded in a recording medium can be accepted for printing, and a printable size is recognized for guaranteeing a quality of a print in the case where the number of pixels in an image is small.

A recording medium used by a digital camera is different from a film in the following points:

1. The number of images to be recorded therein changes in accordance with the number of pixels and an image quality mode (a compression mode).
2. Such a recording medium is more expensive than a film.
3. Various types of recording media are available, and no single standard is supported by all the recording media.
4. Image data have a file name and are easy to use on a personal computer. The image data can be organized in the form of an electronic photograph album.
5. Several image data formats are available.
6. Image data can be easily deleted, which means a recording medium can be used repeatedly by deleting image data therein.
7. The number of pixels and an image quality mode necessary for printing are dependent on a print size.

Upon editing image data, users need to pay attention to some of the items in the list described above, such as the number of pixels and the image quality mode (the compression mode), the difference among the image data formats, the difference among the types of recording media, and a print size in addition to the number of pixels and the image quality mode necessary for printing in the print size. However, most users do not pay enough attention thereto.

In order to print an image in high quality, the image is preferably photographed in a high-quality mode. However, if images are recorded in a quality higher than a quality necessary for printing, the quality of a print does not change while only a free space of a recording medium is decreased. A print size is closely related to the number of pixels and the image quality mode. For example, the number of pixels optimal for enlargement changes in accordance with the print size, such as a 2L size and an L size. At the same time, the quality and the print size need to reflect a preference or an intention of a user.

SUMMARY OF THE INVENTION

The present invention has been conceived based on consideration of the above circumstances. An object of the present invention is therefore to provide a system that enables easy digital image data editing that reflects a preference or an intention of a user and enables recording of image data having an optimal number of pixels.

A recording media editing apparatus of the present invention comprises:

recording size reading means for reading sizes of a free space and a used space in each of recording media of different types that store digital image data;

recording size display means for displaying on a display device the used space size and the free space size of each of the recording media by using the same scale for the same sizes for enabling visual comparison thereof; and

first image data editing means for editing the digital image data stored in each of the recording media whose used space size and free space size are displayed by the recording size display means.

The recording media of different types refer to recording media having different recording methods and capacities. For example, the recording media refer to a recording medium using a memory such as a SmartMedia™, a memory card, a CompactFlash ® , and a Memory Stick™, a magnetic recording medium such as a floppy disk and a Zip® disc, a magneto-optic recording medium such as an MO disc, and an optical recording medium such as a DVD, a CD-R, and a CD-RW.

The recording size reading means preferably corresponds to various types of interfaces, such as a parallel interface and interfaces for SSFDC, PCMCIA, USB, SCSI, and ATAPI.

The digital image data refer to still image data or moving image data obtained by a digital camera or the like, and have various formats of recording, such as Exif, JPEG, CAM, CIFF, Motion JPEG, and MPEG.

Displaying the sizes by using the same scale for the same sizes refers to displaying the same sizes in the recording media as the same dimensions although the capacities of the recording media are different. For example, if the recording media have capacities of 128 Mbytes and 64 Mbytes, a recording size of 10 Mbytes therein is displayed by the same scale for both of the recording media.

Displaying the sizes of the used space and the free space for enabling visual comparison thereof refers to displaying the sizes on the display device such as a CRT or liquid crystal display so that a judgment can be made by comparing the sizes as to whether or not the digital image data in one of the recording media can be moved to another one of the recording media or how much of the space has been used or left.

In order to enable visual comparison of the sizes, the sizes are preferably displayed in the form of a bar graph on the display device.

The first image data editing means may move the digital image data stored in one of the recording media to another one of the recording media by moving a portion in the bar graph corresponding to the used space of the former recording medium to a portion in the bar graph corresponding to the latter recording medium.

"Moving the portion corresponding to the used space of the former recording medium to the portion corresponding to the latter recording medium" refers to moving the portion of the used space of the former recording medium in the bar graph to the portion representing the free space of the latter recording medium in the bar graph, by using a GUI (Graphical User Interface). The portion can be moved by a pointing device such as a mouse.

When the first image data editing means moves the digital image data stored in the former recording medium to the latter recording medium, the first image data editing means may confirm that the digital image data have been copied properly to the latter recording medium by comparing the digital image data in the two recording media after copying the digital image data so that the first image data editing means can delete the digital image data from the former recording medium after the confirmation.

"Comparing the digital image data in the two recording media" refers to confirming whether information in the digital image data is the same in the two recording media, by using a program or the like.

The recording media have the digital image data of various image sizes. Consequently, the digital image data may need to be edited after confirmation of the image sizes thereof.

Therefore, the recording media editing apparatus of the present invention may further comprise:

recording area reading means for reading a recording area of the digital image data recorded in each of the recording media of different types;
recording area display means for displaying on the display device a recording order of the digital image data in each of the recording media and a image file size corresponding to the number of recorded pixels thereof for visual confirmation of the recording area position and the image file size, based on the recording area read by the recording area reading means; and
second image data editing means for editing the digital image data whose recording order and image file size are displayed by the recording area display means.

The "images" include both still images and moving images, and the "image file size corresponding to the number of recorded pixels" refers to the number of pixels that is determined (such as 800, 000 pixels or 1 .5 million pixels) when the digital image data are recorded in each of the recording media according to a condition specified at the time of photography (such as a high image quality mode or a normal image quality mode, determined by a number of recorded pixels and a compression rate of a still image) with a digital camera. The image file size corresponds to the number of pixels of the still image, or to the number of pixels in image data of a moving image, recorded by a video camera or the like.

The second image data editing means may enable specification of a portion of the digital image data whose image file size is desired to be changed among the digital image data displayed on the display device so that the second image data editing means can carry out resizing processing on the portion of the digital image data that has been specified.

The "resizing processing" refers to processing for reducing the number of pixels of an image photographed for high image quality to the number of pixels for normal image quality. Therefore, the resizing processing changes only the number of pixels and does not change the content of the image itself represented by the corresponding digital image data.

Another recording media editing apparatus of the present invention comprises:

recording area reading means for reading a recording area of digital image data recorded in a recording medium;
recording area display means for displaying on a display device a recording order of the digital image data recorded in the recording medium and a image file size corresponding to the number of recorded pixels thereof for visual confirmation of the order and the image file size, based on the recording area read by the recording area reading means; and image data editing means for editing the digital image data whose recording order and image file size are displayed by the recording area display means.

Furthermore, the image data editing means in the recording media editing apparatus may enable specification of a portion of the digital image data whose image file size is desired to be changed from among the digital image data displayed on the display device so that the image data editing means can carry out resizing processing on the specified portion of the digital image data.

According to the recording media editing apparatus of the present invention, the free space size and the used space size are read from each of the recording media and displayed on the display device by using the same scale for the same sizes so that the free space size and the used space size in each of the recording media can be compared visually. Therefore, a user can carry out editing of the digital image data recorded in the recording media of different types while confirming the free space size and the used space size displayed on the display device.

By displaying the sizes in the form of a bar graph using the same scale for the same recording sizes, a difference in the recording sizes can be visually confirmed with clarity.

If the digital image data in one of the recording media can be moved to another one of the recording media by moving the portion of the bar graph corresponding to the used space of the former recording medium to the portion of the latter recording medium in the bar graph, judgment can be made visually with reference to the bar graph as to whether or not the digital image data recorded in the former recording medium can be moved to the latter recording medium, for example. In this manner, the digital image data can be moved with certainty.

In the case where the digital image data are moved to the latter recording medium, if the digital image data are deleted from the former recording medium after confirmation of proper copying of the digital image data in the latter recording medium by comparing the digital image data in the two recording media, the digital image data can be moved without a problem.

If the recording order and the image file size corresponding to the number of recorded pixels of the image (still images or moving images) recorded in each of the recording media can be displayed on the display device for visual confirmation thereof by reading the recording area, a relationship can be easily understood between the content of the image represented by the digital image data and how photography thereof was carried out. Furthermore, the recording area can be saved from being used in a wasteful manner.

Moreover, if the resizing processing can be carried out by specifying the portion of the digital image data whose image file size is desired to be changed from among the digital image data displayed on the display device, the resizing processing can be carried out thereon after confirmation of an intention by the user.

BRIEF DESCRIPTION OF THE DRAWINGS

Figure 1 is a block diagram showing the configuration of a recording media editing apparatus as a first embodiment of the present invention;
Figure 2 is a bar graph representing sizes of free spaces and used spaces in recording media;
Figure 3 is a flow chart showing the operation of the first embodiment of the recording media editing apparatus;
Figure 4 is a block diagram showing another recording media editing apparatus as a second embodiment of the present invention;
Figure 5 is a bar graph representing recording areas of digital image data in a recording medium;
Figure 6 is a flow chart showing the operation of the recording media editing apparatus of the second embodiment;
Figure 7 is a block diagram showing the configuration of still another recording media editing apparatus as a third embodiment of the present invention;
Figure 8 shows how much recording area can be saved by resizing processing;
Figure 9 is a block diagram showing a state wherein the recording media editing apparatus of the present invention is connected to a server computer; and

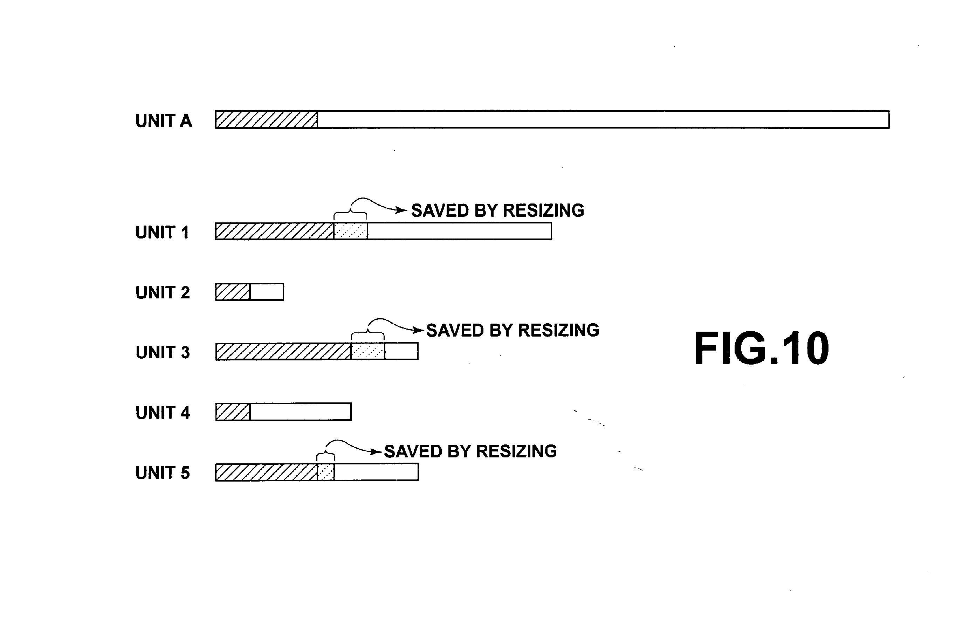

Figure 10 is a bar graph representing digital image data having been moved to a recording medium connected to the server computer.

DESCRIPTION OF THE PREFERRED EMBODIMENTS

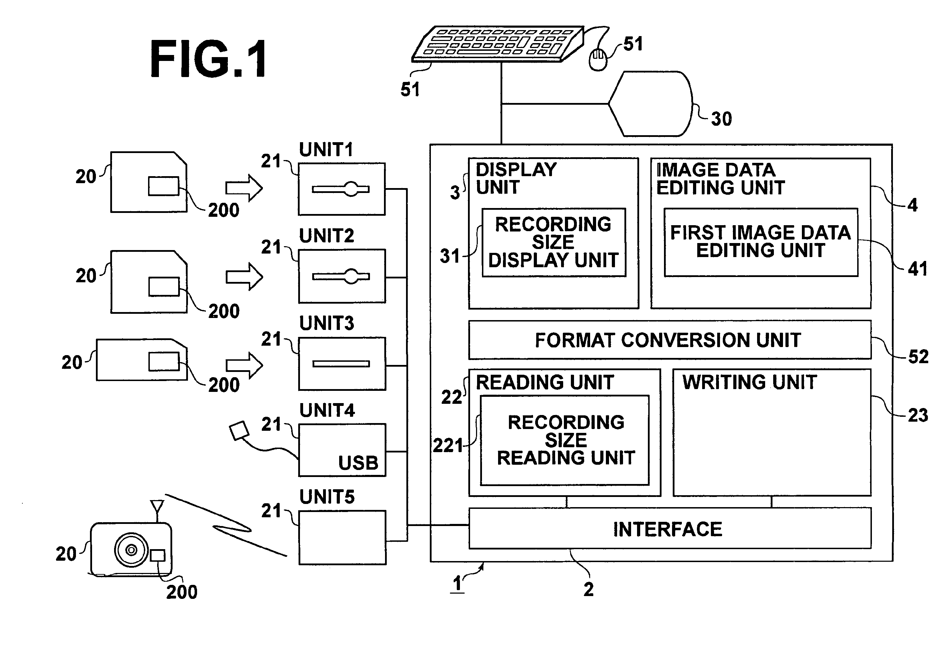

Hereinafter, embodiments of the present invention will be explained with reference to the accompanying drawings. Figure 1 is a block diagram showing the configuration of a recording media editing apparatus as a first embodiment of the present invention. As shown in Figure 1, a recording media editing apparatus 1 is connected to a plurality of units 21 corresponding to recording media 20 of different types, for respectively recording a digital image data set or digital image data sets 200 (hereinafter referred to as the digital image data sets 200). The recording media editing apparatus 1 comprises an interface 2 for reading/writing the digital image data sets 200 from/in the recording media 20, a display unit 3 for displaying recording areas of the digital image data sets 200 in the recording media 20 on a display device 30, and an image data editing unit 4 for editing the digital image data sets 200.

In order to edit the digital image data sets 200, the recording media editing apparatus 1 further comprises input devices 51 for editing the digital image data sets 200, and a format conversion unit 52 for converting a recording format of the digital image data sets 200. The input devices 51 comprise a keyboard, a pointing device such as a mouse, and a touch panel.

The recording media 20 are recording media having different recording formats and capacities, such as a SmartMedia™, a memory card, a CompactFlash® , a Memory Stick$^{TM}$, a floppy disk, a Zip® disc, an MO disc, a DVD, a CD-R, and a CD-RW. The recording media 20 may include an internal memory of a digital camera.

The units 21 are reading/writing devices corresponding to the different types of the recording media 20. Device drivers or the like for controlling the units 21 are used as the interface 2, and it is preferable for the interface 2 to correspond to various standards, such as PCMCIA, SSFDC, USB, SCSI, parallel, and ATAPI.

The recording media editing apparatus 1 further comprises a reading unit 22 for reading the digital image data sets 200 from the recording media 20 inserted in the units 21 via the interface 2, and a writing unit 23 for writing the digital image data sets 200 in the recording media 20. The reading unit 22 comprises a recording size reading unit 221 for reading sizes of free spaces and used spaces in the recording media 20.

The digital image data sets 200 are recorded in the recording media 20 in different formats, such as Exif, JPEG, CAM, and CIFF. The format conversion unit 52 converts the formats of the digital image data sets 200 as necessary.

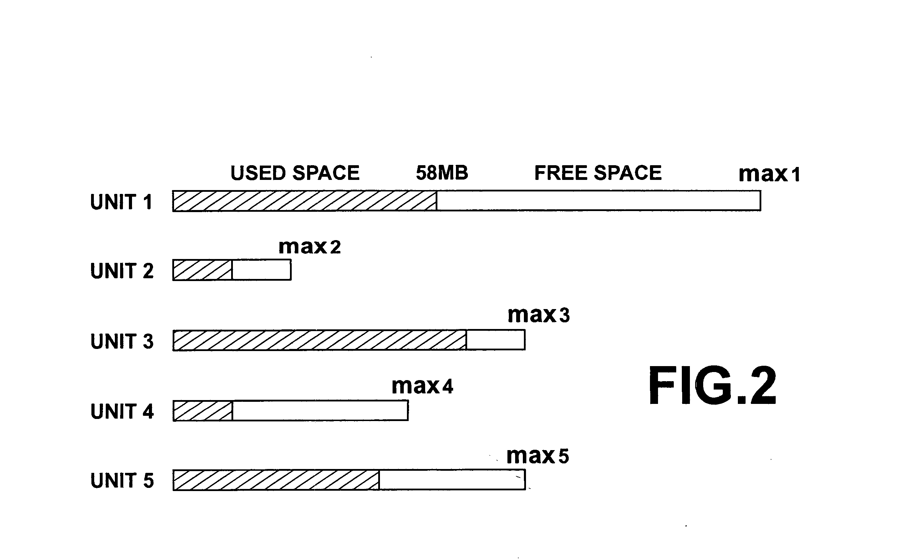

The display unit 3 comprises a recording size display unit 31 for displaying the sizes of the free spaces and the used spaces read by the recording size reading unit 221 on the display device 30 for visual comparison of the sizes. It is preferable for the sizes to be displayed in the form of a bar graph, as shown in Figure 2.

How the sizes are displayed will be explained next with reference to the bar graph shown in Figure 2. In Figure 2, hatched areas in the bar graph represent the used space sizes.

The sizes of the free spaces and the used spaces are displayed by reading the recording areas of the recording media 20 inserted in the units 21. When the sizes are shown for each of the recording media 20, the sizes are displayed according to the same scale.

More specifically, the sizes are scaled with reference to the recording medium 20 having the largest capacity among the recording media 20. For example, assume the case where the recording medium 20 in one of the units 21 (hereinafter referred to as a unit 1) has the largest capacity of 128 MB, while the recording medium 20 in another one of the units 21 (hereinafter referred to as a unit 2) has a capacity of 24 MB. The capacities of the recording media 20 in the units 1 and 2 are denoted as MAX1 and MAX2. In this case,

$$MAX2 = 24/128 = 20\% \text{ of } MAX1$$

Therefore, the length of the bar for MAX2 is 20% of the length of the bar for MAX1.

If the sizes are displayed in the above manner, whether or not the digital image data sets 200 can be moved from one of the recording media 200 to another one of the recording media 20 can be judged. In the case shown in Figure 2, it is visually understood that the image data sets 200 corresponding to one of the units 21 (denoted as unit 5 in Figure 2) can be moved to the recording medium 20 in the unit 1 but not to another one of the units (denoted as unit 3 in Figure 2).

The image data editing unit 4 comprises a first image data editing unit 41 for editing the digital image data sets 200 in the recording media 20, based on the sizes of free spaces and the used spaces displayed on the display device 30 by the recording size display unit 31.

The first image data editing unit 41 can move the digital image data sets 200 recorded in one of the recording media 20 to another one of the recording media 20 by moving the hatched area of the bar representing the used space of the former recording medium 20 to the bar of the latter recording medium 20 displayed on the display device 30, with use of the mouse or the like.

When the digital image data sets 200 are moved from one of the recording media 20 (hereinafter referred to as the source recording medium 20) to another one of the recording media 20 (hereinafter referred to as the destination recording medium 20), the digital image data sets 200 to be moved are copied in the destination recording medium 20, and the digital image data sets 200 in both of the recording media 20 are preferably compared (verified, for example) by software for confirmation of proper copying. Thereafter, the digital image data sets 200 are deleted from the original recording medium 20.

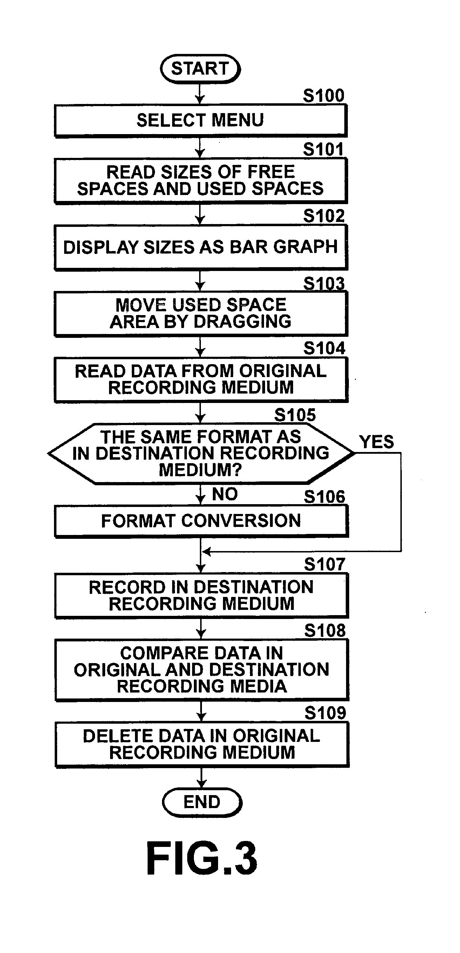

The operation of editing of the digital image data sets 200 will be explained in detail with reference to a flow chart shown in Figure 3.

The recording media editing apparatus 1 displays a list of manipulations and editing, according to automatic set-up at the time of activation thereof. A user selects a menu for editing the recording media 20 from the list (Step S100). The recording area reading unit 221 of the reading unit 22 reads the sizes of the free spaces and the used spaces of the recording media 20 in the units 21 (Step S101), and the recording size display unit 31 displays the sizes as the bar graph on the display device 30 (Step S102).

The user then selects the hatched area of one of the bars displayed on the display device 30 by using the mouse or the like, and drags the hatched area to another one of the bars (Step S103). The reading unit 22 then reads the digital image data sets 200 recorded in the source recording medium 20 (Step S104) . Since the digital image data sets 200 have been recorded in various formats, it is confirmed whether or not the digital image data sets 200 read by the reading unit 22 have the same format as in the destination recording medium 20 (Step S105). If a result of the judgment is negative, the format conversion unit 52 converts the digital image data sets 200 into the format of the destination recording medium (Step S106). The writing unit 23 then writes the digital image data sets 200 in the destination recording medium (Step S107). In the case where the two recording media have the same format, the format is not converted, and the writing unit 23 writes the digital image data sets 200 as they are in the destination recording medium 20 (Step S107).

Confirmation is carried out as to whether or not the digital image data sets 200 have been copied properly by comparison of the digital image data sets 200 in the source recording medium 20 and in the destination recording medium 20 (Step S108), and the digital image data sets 200 are deleted from the source recording medium 20 (Step S109).

When the digital image data sets 200 are moved to the destination recording medium 20, confirmation is made as to whether the file names of the digital image data sets 200 in the source recording medium are not the same as the file names of the digital image data sets 200 that have been stored already in the destination recording medium 20. In the case where the same file name or names are used in the two recording media 20, the file name or names are renamed so that the file names are not the same in the two recording media 20 . Alternatively, when the digital image data sets 200 are moved to the destination recording medium 20, a number may be added to each of the file names of the digital image data sets 200 so that the file names are not the same in the two recording media.

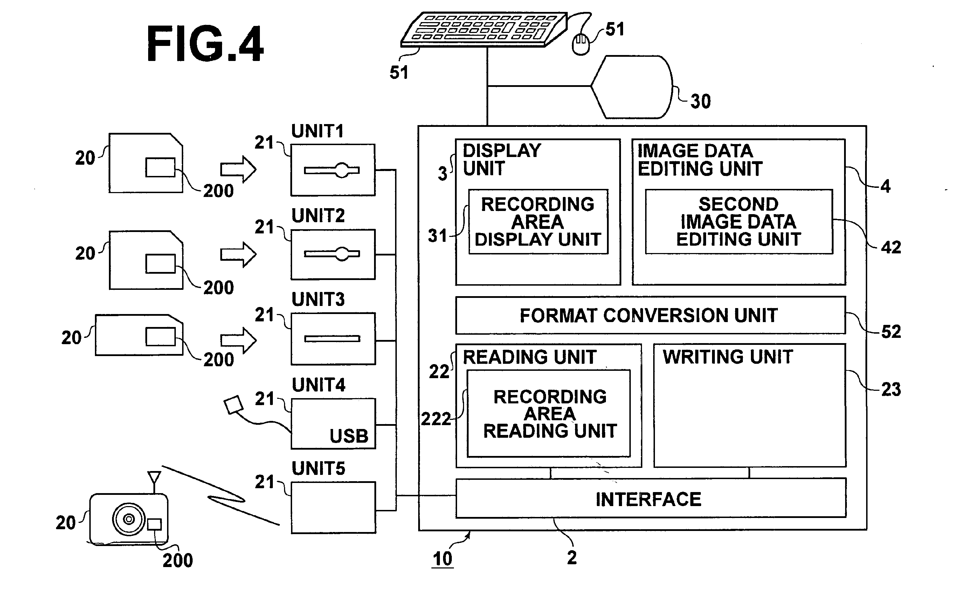

A second embodiment of the recording media editing apparatus of the present invention will be explained with reference to the configuration thereof shown in Figure 4. In a recording media editing apparatus 10 shown in Figure 4, the same elements as in the first embodiment have the same reference numbers, and detailed explanations thereof will be omitted. Therefore, only differences from the recording media editing apparatus 1 will be explained.

The reading unit 22 has a recording area reading unit 222 for reading a recording area in which each of the digital image data sets 200 is recorded in the corresponding one of the recording media 20.

The display unit 3 comprises a recording area display unit 32 for displaying on the display device 30 a recording order in which each of the digital image data sets 200 is recorded in the corresponding one of the recording media 20 and a image file size corresponding to the number of recorded pixels of still images or moving images, based on the recording area read by the recording area reading unit 222. In this manner, the recording order and the image file size can be confirmed visually.

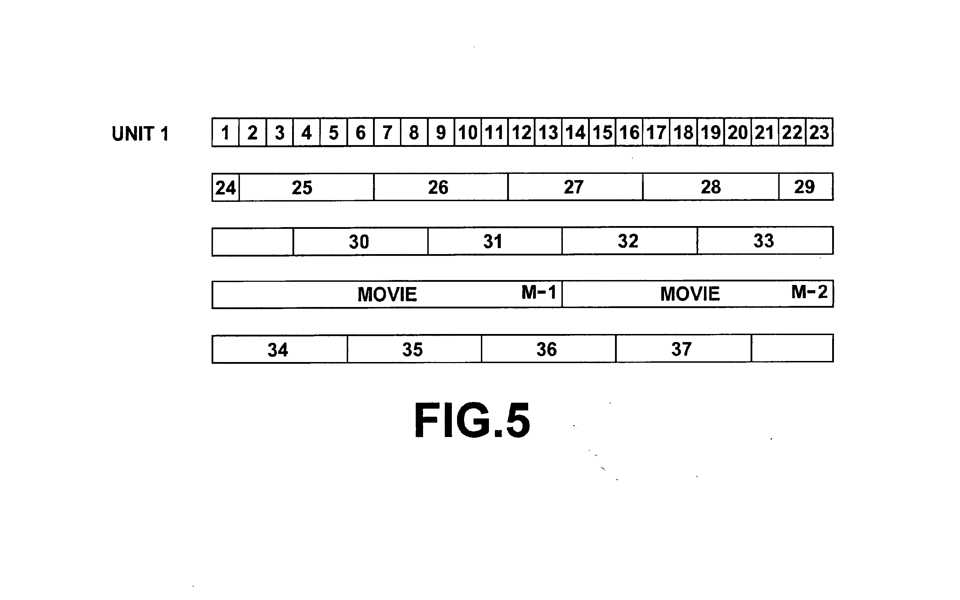

Each of the digital image data sets 200 is recorded in the corresponding recording medium 20 so as to have the number of pixels (such as 800,000 pixels or 1.5 million pixels) that is determined corresponding to a high quality image or a normal quality image specified at the time of photography with a digital camera. Therefore, the recording area display unit 32 displays the image file size corresponding to the number of pixels to enable the user to visually confirm the image file size, as shown in Figure 5. The recording area display unit 32 also displays the recording order in relation to the image file size of each of the digital image data sets 200. In the example shown in Figure 5, the digital image data sets 200 are recorded in a "Normal" mode from the 1st to the 24th frame. Then, the number of pixels and the image quality are changed to a "Fine" high quality mode from the 25th frame, and movies are recorded between the 33rd frame and the 34th frame.

The image data editing unit 4 has a second image data editing unit 42 for editing the digital image data sets 200 (such as resizing processing thereon) with reference to the recording order and the image file size thereof displayed on the display device 30 by the recording area display unit 32.

The second image data editing unit 42 enables the user to select any one of the digital image data sets 200 whose image file size is desired to be changed from among the digital image data sets 200 shown on the display device 30, and carries out resizing processing thereon.

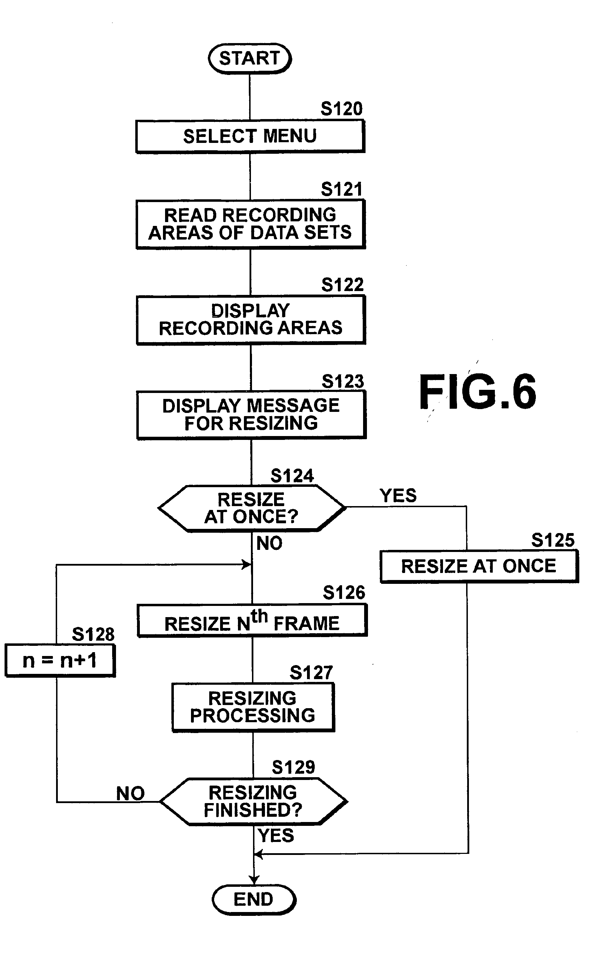

The operation of the resizing processing on the digital image data sets 200 will be explained next, with reference to a flow chart shown in Figure 6.

The recording media editing apparatus 10 displays the list of the manipulations and editing according to the automatic set-up at the time of activation of the apparatus 10. The user selects a menu for resizing from the list (Step S120). The recording area reading unit 222 of the reading unit 22 reads the recording area of each of the digital image data sets 200 stored in the respective recording media 20 inserted in the units 21 (Step S121), and the recording area display unit 32 displays the recording area on the display device 30 (Step S122) .

When photography is performed using a digital still camera, usually, the compression mode is set to "Normal". However, in cases in which an image which is to be greatly enlarged, such as a landscape image, is photographed, photography is performed by setting the compression mode to "Fine", so that a high quality image, which will not have a grainy appearance when enlarged and printed, can be obtained. If, after photography in the high quality image mode, a user forgets to reset the compression mode to "Normal", all images photographed thereafter are photographed in the high quality image mode. Therefore, a large amount of memory is utilized.

In the case where the number of pixels is large in some of the digital image data sets 200, a message is displayed. For example, if the digital image data sets 200 recorded from the 25th frame have sizes larger than a standard size, the message "Images from the 25th frame have sizes larger than a standard size" is displayed, for example. In this manner, the user can recognize the fact that some of the digital image data sets 200 have sizes exceeding the standard size. In addition, a message for prompting the resizing processing, such as "The recording area can be saved by 10% through resizing processing using the L size as a maximum size", is displayed (Step S123).

The user confirms whether the digital image data sets 200 having the excessive sizes from the 25th frame are resized all together or one by one (step S124). In the case of resizing processing all together, the digital image data sets 200 having the excessive sizes are resized at once (Step S125). In the case of resizing processing carried out one by one, the user is sequentially asked whether the respective digital image data sets 200 are to be resized or not, while the digital image data sets 200 are displayed one by one (Step S126). The digital image data set 200 in an $n^{th}$ frame selected sequentially in this manner is subjected to the resizing processing (Step S127). The user can then select another one of the digital image data sets 200 to be resized (Step S128). In this manner, the user can confirm whether or not the resizing processing is carried out on the corresponding digital image data sets 200 (Step S129).

In this manner, the recording areas of the recording media can be used efficiently while the intention of the user can be reflected, as has been described above.

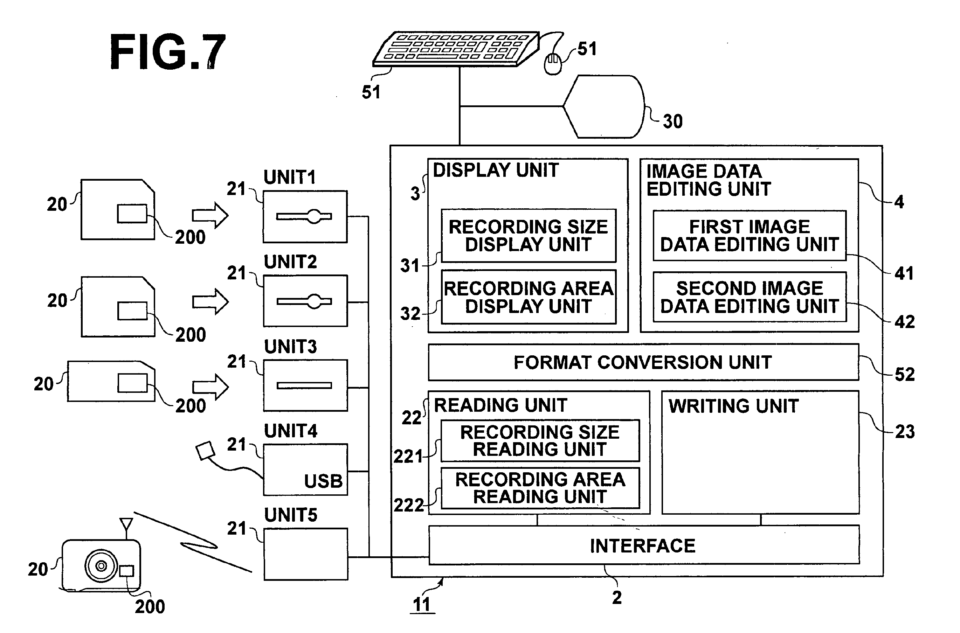

A third embodiment of the recording media editing apparatus of the present invention will be explained next, with reference to the configuration thereof shown in Figure 7. In a recording media editing apparatus 11 shown in Figure 7, the same elements as in the recording media editing apparatuses 1 and 10 have the same reference numbers, and detailed explanations thereof will be omitted. Therefore, only differences from the recording media editing apparatuses 1 and 10 will be explained.

The reading unit 22 in the recording media editing apparatus 11 comprises the recording size reading unit 221 and the recording area reading unit 222. The display unit 3 has the recording size display unit 31 and the recording area display unit 32. The image data editing unit 4 comprises the first image data editing unit 41 and the second image data editing unit 42.

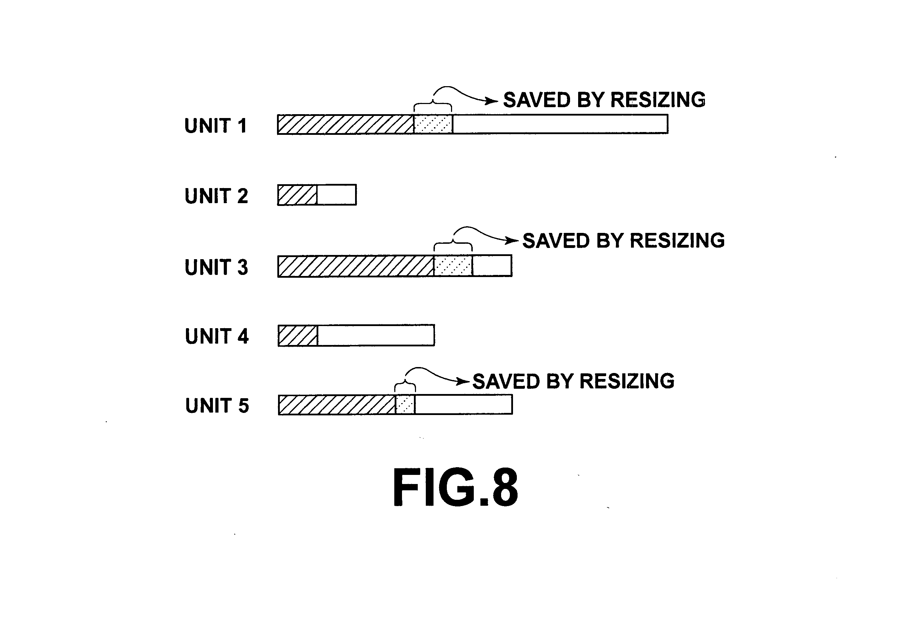

In this configuration, the second image data editing unit 42 can carry out the resizing processing on the recording media 20 in the units 21 as necessary. Figure 8 shows an example of the resizing processing. Stippled areas in Figure 8 shown for the units 1, 3, and 5 represent the areas that are saved by the resizing processing. The recording media 20 having been subjected to the resizing processing can further be edited by the first image data editing unit 41 so that the digital image data sets 200 in one of the recording media 20 can be moved to another one of the recording media 20.

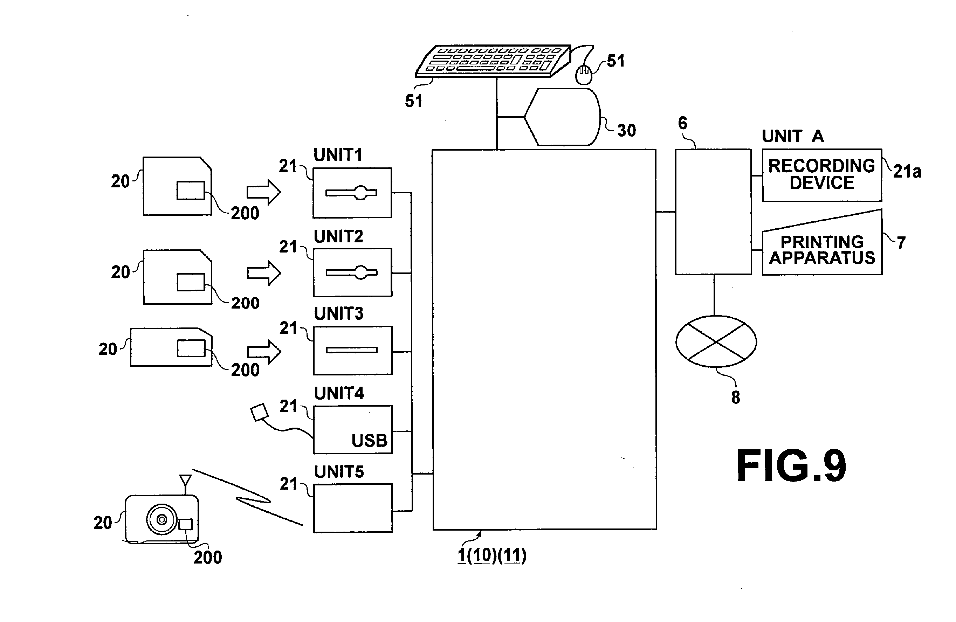

Furthermore, as shown in Figure 9, the recording media editing apparatus 1, 10, or 11 may be connected to a server computer 6 for processing a printing order.

The server computer 6 is preferably connected to a unit 21a for recording the digital image data sets 200 in a recording medium for permanent storage, such as a DVD or CD-R. It is also preferable for the server computer 6 to be connected to a printing apparatus 7 such as a TA (Thermo-Autochrome) printer for printing a photograph or an index print.

In this manner, the recording size display unit 31 of the recording media editing apparatus 1 or 11 displays the sizes of the free spaces and the used spaces in the recording medium 20 inserted in the unit 21a connected to the server computer 6 and in the recording media 20 in the units 21 connected to the recording media editing apparatus 1 or 11. The first image data editing unit 41 can move the digital image data sets 200 from one of the recording media 20 in one of the units 21 connected to the recording media editing apparatus to the recording medium 20 of the unit 21a connected to the server computer 6. In this manner, the digital image data sets 200 stored in the recording media 20 such as a SmartMedia™, a memory card, a CompactFlash®, a Memory Stick™, and a floppy disc to the recording medium 20 that has a large capacity in the unit 21a. In this manner, the digital image data sets 200 can be stored as an electronic photograph album. At this time, it is preferable that categories (such as family trip, anniversary, and business) are defined in the recording medium 20 having the large capacity so that the recording media 20 to be inserted in the units 21 can also be managed according to the categories.

The digital image data sets 200 can also be printed by the printing apparatus 7 as necessary.

Furthermore, the server computer 6 may be connected to a laboratory via a network 8 such as the Internet. In this manner, photograph services can be provided for viewing, searching, and downloading of the digital image data sets 200, for placing a printing order, for outputting the digital image data sets 200 to a recording medium such as a DVD, and for transfer thereof.

**Claims**

1. A recording media editing apparatus comprising:

   recording size reading means for reading sizes of a free space and a used space in each of recording media of different types, the recording media respectively storing digital image data;

recording size display means for displaying on a display device the used space size and the free space size of each of the recording media by using the same scale for the same sizes for enabling visual comparison thereof; and

first image data editing means for editing the digital image data stored in each of the recording media whose used space size and free space size are displayed by the recording size display means.

2. The recording media editing apparatus according to Claim 1, wherein the sizes are displayed in the form of a bar graph.

3. The recording medium editing apparatus according to Claim 2, wherein the first image data editing means moves the digital image data stored in one of the recording media to another one of the recording media by moving a portion in the bar graph corresponding to the used space of the former recording medium to a portion in the bar graph corresponding to the latter recording medium.

4. The recording media editing apparatus according to Claim 3, wherein, when the first image data editing means moves the digital image data stored in the former recording medium to the latter recording medium, the first image data editing means confirms that the digital image data have been copied properly in the latter recording medium by comparing the digital image data in the two recording media after copying the digital image data, and deletes the digital image data from the former recording medium thereafter.

5. The recording media editing apparatus according to any one of Claims 1 to 4, further comprising:

recording area reading means for reading a recording area of the digital image data recorded in each of the recording media of different types;

recording area display means for displaying on the display device the recording order of the digital image data and an image file size corresponding to the number of recorded pixels thereof for visual confirmation of the recording order and the image file size, based on the recording area read by the recording area reading means; and

second image data editing means for editing the digital image data whose recording order and image file size are displayed by the recording area display means.

6. The recording media editing apparatus according to Claim 5, wherein the second image data editing means enables specification of a portion of the digital image data whose image file size is desired to be changed from among the digital image data displayed on the display device, and carries out resizing processing on the portion of the digital image data that has been specified.

7. A recording media editing apparatus comprising:

recording area reading means for reading a recording area of digital image data recorded in a recording medium;

recording area display means for displaying on a display device a recording order of the digital image data recorded in the recording medium and an image file size corresponding to the number of recorded pixels thereof for visual confirmation of the recording order and the image file size, based on the recording area read by the recording area reading means; and

image data editing means for editing the digital image data whose recording area position and image file size are displayed by the recording area display means.

8. The recording media editing apparatus according to Claim 7, wherein the image data editing means enables specification of a portion of the digital image data whose image file size is desired to be changed from among the digital image data displayed on the display device and carries out resizing processing on the specified portion of the digital image data.

# FIG.1

UNIT1

UNIT2

UNIT3

UNIT4

USB

UNIT5

20 — 200

20 — 200

20 — 200

20 — 200

21

30

DISPLAY UNIT

RECORDING SIZE DISPLAY UNIT

IMAGE DATA EDITING UNIT

FIRST IMAGE DATA EDITING UNIT

FORMAT CONVERSION UNIT

READING UNIT

RECORDING SIZE READING UNIT

WRITING UNIT

INTERFACE

EP 1 406 432 A2

UNIT 1    USED SPACE    58MB    FREE SPACE    **max 1**

UNIT 2    **max 2**

UNIT 3    **max 3**

UNIT 4    **max 4**

UNIT 5    **max 5**

# FIG.2

EP 1 406 432 A2

START

**SELECT MENU** — S100

**READ SIZES OF FREE SPACES AND USED SPACES** — S101

**DISPLAY SIZES AS BAR GRAPH** — S102

**MOVE USED SPACE AREA BY DRAGGING** — S103

**READ DATA FROM ORIGINAL RECORDING MEDIUM** — S104

**THE SAME FORMAT AS IN DESTINATION RECORDING MEDIUM?** — S105 → YES

NO

**FORMAT CONVERSION** — S106

**RECORD IN DESTINATION RECORDING MEDIUM** — S107

**COMPARE DATA IN ORIGINAL AND DESTINATION RECORDING MEDIA** — S108

**DELETE DATA IN ORIGINAL RECORDING MEDIUM** — S109

END

# FIG.3

# FIG.4

EP 1 406 432 A2

UNIT 1  | 1 | 2 | 3 | 4 | 5 | 6 | 7 | 8 | 9 |10|11|12|13|14|15|16|17|18|19|20|21|22|23|

|24| 25 | 26 | 27 | 28 | 29 |

| | 30 | 31 | 32 | 33 |

| MOVIE M-1 | MOVIE M-2 |

| 34 | 35 | 36 | 37 | |

# FIG.5

EP 1 406 432 A2

**FIG.6**

Flowchart:

START
↓
S120 SELECT MENU
↓
S121 READ RECORDING AREAS OF DATA SETS
↓
S122 DISPLAY RECORDING AREAS
↓
S123 DISPLAY MESSAGE FOR RESIZING
↓
S124 RESIZE AT ONCE? — YES → S125 RESIZE AT ONCE
NO ↓
S126 RESIZE $N^{th}$ FRAME
↓
S127 RESIZING PROCESSING
↓
S129 RESIZING FINISHED? — NO → S128 $n = n+1$ (loops back)
YES ↓
END

# FIG.7

UNIT1

20 — 200

21

UNIT2

20 — 200

21

UNIT3

20 — 200

21

UNIT4

21

USB

UNIT5

20 — 200

21

DISPLAY UNIT

3

RECORDING SIZE
DISPLAY UNIT

31

RECORDING AREA
DISPLAY UNIT

32

IMAGE DATA
EDITING UNIT

4

FIRST IMAGE
DATA EDITING UNIT

41

SECOND IMAGE
DATA EDITING UNIT

42

FORMAT CONVERSION UNIT

52

READING UNIT

22

RECORDING SIZE
READING UNIT

221

RECORDING AREA
READING UNIT

222

WRITING UNIT

23

INTERFACE

11

2

51

30

EP 1 406 432 A2

15

EP 1 406 432 A2

UNIT 1

SAVED BY RESIZING

UNIT 2

UNIT 3

SAVED BY RESIZING

UNIT 4

UNIT 5

SAVED BY RESIZING

# FIG.8

FIG.9

EP 1 406 432 A2

UNIT A

UNIT 1 ── SAVED BY RESIZING

UNIT 2

UNIT 3 ── SAVED BY RESIZING

UNIT 4

UNIT 5 ── SAVED BY RESIZING

FIG.10

EP 1 406 432 A2